# FASCICULE DE BREVET EUROPEEN

(11) **EP 2 960 715 B1**
(45) Date de publication et mention de la délivrance du brevet: **24.10.2018**
(21) Numéro de dépôt: 15172608.0
(22) Date de dépôt: 17.06.2015
(51) Int. Cl.: G02F 1/313, G02B 5/18, F21V 8/00, G02B 27/01

(54) **DISPOSITIF DE PROJECTION D'UNE IMAGE**
VORRICHTUNG ZUR PROJEKTION EINES BILDES
DEVICE FOR PROJECTING AN IMAGE

(30) Priorité: 24.06.2014 FR 1455845
(43) Date de publication de la demande: 30.12.2015
(73) Titulaire: COMMISSARIAT À L'ÉNERGIE ATOMIQUE ET AUX ÉNERGIES ALTERNATIVES, 75015 Paris (FR)
(72) Inventeur: MARTINEZ, Christophe, 38100 GRENOBLE (FR)
(74) Mandataire: Cabinet Beaumont

(56) Documents cités:
- US-A- 5 106 181
- US-A- 5 852 688
- US-A1- 2014 043 320

## Description

### Domaine

La présente demande concerne un dispositif de projection d'une image. Elle concerne notamment un dispositif de projection pouvant être utilisé dans un dispositif d'affichage d'images en réalité augmentée destiné à être porté sur la tête, sans toutefois se limiter à ce domaine applicatif particulier.

### Exposé de l'art antérieur

L'affichage d'images en réalité augmentée consiste à superposer, à une image du monde réel, une image contenant des informations supplémentaires à l'attention d'un observateur, par exemple des informations sur son environnement, sa position, sa vitesse de déplacement, etc.

Les dispositifs d'affichage d'images en réalité augmentée destinés à être portés sur la tête sont généralement désignés par l'acronyme HMD, de l'anglais "Head Mounted Display". De tels dispositifs peuvent comprendre une lame semi-transparente placée à quelques millimètres ou centimètres de l'oeil d'un utilisateur et inclinée à 45 degrés par rapport à l'axe optique moyen de l'oeil, à travers laquelle l'utilisateur peut voir en transparence une scène réelle. Un dispositif de projection miniaturisé permet d'afficher des informations sur la lame semi-transparente, de façon que ces informations soient perçues par l'utilisateur comme étant intégrées à la scène réelle vue à travers la lame. Les dispositifs existants présentent toutefois divers inconvénients, résidant notamment dans leur encombrement relativement important, ainsi que dans le rendement lumineux relativement faible et le champ angulaire relativement restreint du dispositif de projection.

Les documents US5106181 et US5852688 décrivent des exemples de dispositifs de projection d'images.

### Résumé

Un objet d'un mode de réalisation est de prévoir un dispositif de projection d'une image palliant tout ou partie des inconvénients des dispositifs de projection existants, ce dispositif pouvant notamment être utilisé dans un dispositif d'affichage d'images en réalité augmentée destiné à être porté sur la tête, ou pouvant être utilisé pour d'autres applications.

Ainsi, un mode de réalisation prévoit un dispositif de projection d'une image, comprenant : au moins un guide d'onde formé dans un substrat ; au moins une source d'émission laser commandable en intensité configurée pour injecter dans le guide d'onde un faisceau laser d'orientation constante ; et au moins un dispositif d'extraction comprenant une pluralité de cellules d'extraction couplées à des zones distinctes du guide, chaque cellule correspondant à un unique pixel de l'image et étant activable électriquement pour extraire de la lumière du guide et projeter cette lumière selon une direction de projection prédéterminée, dans lequel différentes cellules d'extraction ont des directions de projection d'orientations distinctes.

Selon un mode de réalisation, chaque cellule d'extraction comprend : un réseau de diffraction revêtant une portion d'une face du guide ; une couche d'indice de réfraction commandable électriquement recouvrant le réseau ; et au moins une électrode de commande de l'indice de réfraction de ladite couche.

Selon un mode de réalisation, des réseaux de diffraction de cellules d'extraction distinctes ont des pas distincts ou des orientations distinctes par rapport à une direction longitudinale du guide.

Selon un mode de réalisation, chaque cellule d'extraction comprend un élément holographique superposé à la couche d'indice de réfraction commandable, adapté à orienter, dans la direction de projection de la cellule, de la lumière extraite du guide par le réseau de diffraction de la cellule.

Selon un mode de réalisation, les réseaux de diffraction des différentes cellules ont le même pas et la même orientation par rapport à une direction longitudinale du guide.

Selon un mode de réalisation, le dispositif de projection comprend plusieurs guides d'onde formés dans le substrat, plusieurs sources d'émission laser, et plusieurs dispositifs d'extraction, chaque guide d'onde étant couplé à l'une des sources d'émission laser et à l'un des dispositifs d'extraction.

Selon un mode de réalisation, les différents dispositifs d'extraction ont tous le même nombre de cellules d'extraction, et les cellules de même rang des différents dispositifs d'extraction ont leurs électrodes de commande connectées, le rang d'une cellule d'extraction correspondant à son ordre de positionnement, par rapport aux autres cellules du même dispositif d'extraction, entre des première et deuxième extrémités du guide auquel est couplé le dispositif d'extraction.

Selon un mode de réalisation, plusieurs guides d'onde sont connectés optiquement, c'est-à-dire qu'ils sont adaptés à être alimentés en lumière par une même source lumineuse.

Selon un mode de réalisation, plusieurs cellules d'extraction couplées à des guides d'onde distincts connectés optiquement ont des directions de projection parallèles.

Selon un mode de réalisation, dans chaque dispositif d'extraction, plusieurs cellules d'extraction sont connectées électriquement, ces cellules ayant des directions de projection parallèles.

Selon un mode de réalisation, les cellules d'extraction sont réparties de façon irrégulière sur la surface du dispositif.

Selon un mode de réalisation, le faisceau laser d'orientation constante est un faisceau de rayons sensiblement parallèles à la direction longitudinale du guide d'onde dans lequel il est injecté.

Selon un mode de réalisation, en section transversale, la plus grande dimension du guide d'onde est inférieure ou égale à 2 µm.

Selon un mode de réalisation, la surface d'émission de chacune des cellules d'extraction est inférieure ou égale à 5 µm².

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
les figures 1A et 1B illustrent de façon schématique des principes optiques de vision conditionnant la perception d'une scène par un observateur ;
la figure 2 est une vue en perspective illustrant de façon schématique un exemple d'un mode de réalisation d'un dispositif de projection d'image ;
les figures 3A et 3B sont des vues en perspective partielles illustrant de façon plus détaillée, dans deux configurations de fonctionnement, un exemple de réalisation du dispositif de projection de la figure 2 ;
la figure 4 est une vue en perspective partielle illustrant de façon plus détaillée un autre exemple de réalisation du dispositif de projection de la figure 2 ;
les figures 5A à 5C sont des schémas illustrant le comportement dans l'oeil d'un observateur de différents types de faisceaux lumineux ;
la figure 6 est une vue de dessus illustrant de façon schématique un exemple d'un mode de réalisation d'un dispositif de projection d'image ;
les figures 7A à 7C représentent schématiquement diverses configurations d'un dispositif de projection d'image, et, pour chaque configuration, la perception, pour un observateur, de la projection d'une image ponctuelle ;
la figure 8 est une vue de dessus illustrant de façon schématique un exemple d'un mode de réalisation d'un dispositif de projection d'image ; et
les figures 9A et 9B sont des vues en coupe illustrant de façon schématique et partielle un exemple d'un procédé de réalisation d'un dispositif de projection d'image.

### Description détaillée

Par souci de clarté, de mêmes éléments ont été désignés par de mêmes références aux différentes figures et, de plus, les diverses figures ne sont pas tracées à l'échelle. Par ailleurs, dans la suite de la description, sauf indication contraire, les termes "approximativement", "sensiblement", "environ", "quasiment" et "de l'ordre de", signifient "à 10% près", ou, lorsqu'il s'agit de références angulaires ou assimilées, "à 5 degrés près", et des références directionnelles telles que "latéral", "en dessous", "au-dessus", "supérieur", "inférieur", "surmontant", etc., s'appliquent à des dispositifs orientés de la façon illustrée dans les vues correspondantes, étant entendu que, dans la pratique, ces dispositifs peuvent être orientés différemment.

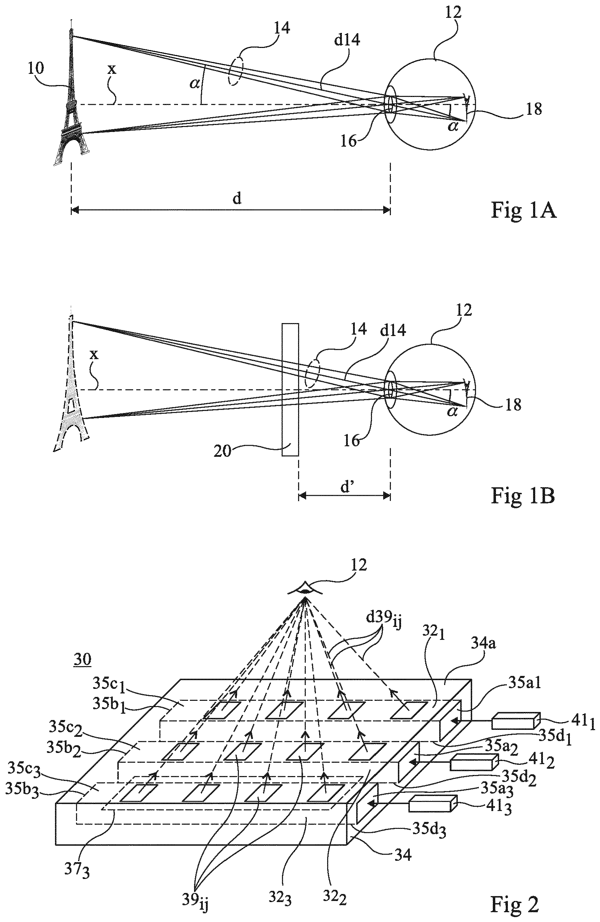

Les figures 1A et 1B illustrent de façon schématique des mécanismes optiques de vision conditionnant la perception d'une scène par un observateur.

La figure 1A illustre le trajet des rayons lumineux entre un objet réel 10 et un oeil 12 d'un observateur.

Comme cela apparaît sur la figure, chaque point de l'objet 10 produit un faisceau 14 de rayons lumineux capté par la pupille 16 de l'oeil. Le faisceau 14 est focalisé par l'oeil en un point de la rétine 18. On appelle angle de vision α d'un point de l'objet 10, l'angle formé entre l'axe optique principal X du regard et la direction principale d14 du faisceau 14 émis par le point objet - c'est-à-dire la direction passant par le point objet et le centre optique de l'oeil (point par lequel les rayons entrants ne sont pas déviés). L'angle α détermine la taille de l'image de l'objet formée sur la rétine.

Par ailleurs, on appelle accommodation les modifications physiologiques permettant à l'oeil 12 d'assurer la netteté des images formées sur la rétine 18 pour différentes distances d de vision entre l'objet 10 et l'oeil 12. A titre d'exemple, si la distance d est suffisamment importante, les rayons du faisceau 14 émis par un point de l'objet 10 peuvent être considérés comme étant parallèles. En revanche, si la distance d est faible, le faisceau 14 peut avoir un certain angle de divergence. L'oeil humain est naturellement capable, par des modifications physiologiques, notamment par la déformation du cristallin, d'accommoder de façon à assurer la netteté de l'image formée sur la rétine pour différentes distances d, c'est-à-dire de façon à assurer que l'image d'un point de l'objet 10 soit toujours ponctuelle ou considérée comme telle. La sensation d'accommodation permet notamment à l'observateur d'évaluer la taille de l'objet vis-à-vis de l'angle de vision de l'objet. En particulier, elle permet à l'observateur de discriminer un objet de petite taille situé à proximité de l'oeil d'un objet de plus grande taille situé à une distance plus importante de l'oeil.

Comme l'illustre la figure 1B, si l'on souhaite générer artificiellement la vision d'une scène au moyen d'un dispositif de projection 20 situé à une distance arbitraire d' de l'oeil, il est souhaitable que le dispositif 20 soit adapté à générer des faisceaux de lumière 14' sensiblement de même orientation angulaire α et de même degré de divergence que les faisceaux 14 émis par les points de l'objet réel, afin de donner l'illusion des deux effets susmentionnés d'angle de vision et d'accommodation à une distance d souhaitée.

Les dispositifs de projection existants comprennent généralement un imageur adapté à former une image artificielle de l'objet dans un plan d'affichage situé en dehors de l'oeil (par exemple une matrice de pixels d'affichage lumineux ou un dispositif adapté à projeter une image sur un écran diffuseur), et un système optique situé entre ce plan d'affichage et l'oeil, adapté à mettre en forme l'image artificielle de l'objet de façon à donner l'illusion des effets susmentionnés d'angle de vision et d'accommodation.

Selon un aspect des modes de réalisation décrits, on prévoit ici un dispositif de projection d'image ne comportant pas un imageur au sens classique du terme, c'est-à-dire un imageur adapté à générer une image artificielle d'une scène dans un plan situé en dehors de l'oeil. Plus particulièrement, on prévoit ici un dispositif de projection adapté à former une image directement sur la rétine de l'observateur, par un jeu approprié d'émissions laser.

La figure 2 est une vue en perspective illustrant de façon schématique un exemple d'un mode de réalisation d'un dispositif 30 de projection d'une image.

Le dispositif de projection 30 comprend N guides d'onde optiques 32ᵢ formés dans un substrat transparent 34, par exemple un substrat en verre, où N est un nombre entier supérieur ou égal à 1 et i est un nombre entier compris dans la plage allant de 1 à N. Dans l'exemple représenté, N est égal à 3. Les modes de réalisation décrits ne se limitent toutefois pas à ce cas particulier. Dans cet exemple, chaque guide d'onde 32ᵢ a la forme d'un ruban rectiligne s'étendant dans la direction longitudinale du guide entre des première et seconde extrémités 35aᵢ et 35bᵢ du guide, et les différents guides 32ᵢ sont sensiblement identiques et parallèles entre eux. A titre d'exemple, en section transversale, la plus grande dimension de chacun des guides d'onde 32ᵢ n'excède pas 2 µm. Dans cet exemple, les guides d'onde 32i sont situés dans un même plan moyen approximativement parallèle à une face 34a du substrat 34, c'est-à-dire que chaque guide à ses faces principales 35cᵢ et 35dᵢ, ou faces de plus grandes surfaces, approximativement parallèles à la face 34a du substrat, les faces 35cᵢ des différents guides d'une part et les faces 35dᵢ des différents guides d'autre part étant approximativement coplanaires. La référence 35cᵢ désigne ici la face principale du guide 32ᵢ la plus proche de la face 34a du substrat, et la référence 35dᵢ désigne la face principale du guide 32ᵢ la plus éloignée de la face 34a du substrat. Dans cet exemple, les faces d'extrémité 35aᵢ des différents guides d'une part et les faces d'extrémité 35bᵢ des différents guides d'autre part sont sensiblement coplanaires, orthogonales à la face 34a du substrat, et orthogonales à la direction longitudinale des guides.

Le dispositif de projection 30 comprend en outre N dispositifs d'extraction de lumière 37ᵢ, chaque dispositif d'extraction 37ᵢ étant couplé au guide d'onde 32ᵢ de même indice i via la face principale 35cᵢ du guide. Chaque dispositif d'extraction de lumière 37ᵢ comprend M cellules d'extractions 39ᵢⱼ couplées à des zones distinctes de la face 35cᵢ du guide 32ᵢ, où M est un nombre entier supérieur ou égal à 2 et j est un nombre entier compris dans la plage allant de 1 à M. Dans l'exemple représenté, M est égal à 4. Les modes de réalisation décrits ne se limitent toutefois pas à ce cas particulier. Dans cet exemple, dans chaque dispositif d'extraction 37ᵢ, les cellules 39ᵢⱼ sont disposées à espacement régulier sur sensiblement toute la longueur du guide 32ᵢ correspondant, par ordre d'indice j croissant entre l'extrémité 35aᵢ et l'extrémité 35bᵢ du guide. Dans cet exemple, les cellules d'extraction 39ᵢⱼ de même indice ou rang j sont alignées selon une direction approximativement orthogonale à la direction longitudinale des guides. Chaque cellule 39ᵢⱼ est activable électriquement et est adaptée, lorsqu'elle est activée, à extraire de la lumière se propageant dans le guide 32ᵢ et à projeter cette lumière vers l'extérieur du dispositif 30 selon une direction d39ᵢⱼ prédéterminée. Lorsqu'une cellule 39ᵢⱼ est désactivée, elle n'a pas d'effet sur la lumière circulant dans le guide 32i.

Selon un aspect des modes de réalisation décrits, dans chaque dispositif d'extraction 37ᵢ, des cellules d'extraction 39ᵢⱼ distinctes présentant des directions de projection d39ᵢⱼ d'orientations distinctes par rapport à la face 35cᵢ du guide 32ᵢ correspondant. Dans l'exemple représenté, les orientations des directions de projection d39ᵢⱼ des cellules d'extraction 39ᵢⱼ par rapport à la face supérieure 34a sont toutes différentes les unes des autres. Le dispositif de projection 30 est destiné à être positionné devant un observateur de façon que les faisceaux projetés par les différentes cellules d'extraction 39ᵢⱼ atteignent tous la pupille d'un oeil 12 de l'observateur.

Le dispositif de projection 30 comprend en outre N sources d'émission laser 41ᵢ commandables individuellement en intensité. Chaque source laser 41ᵢ est adaptée à injecter dans le guide 32ᵢ de même rang i, un faisceau lumineux monochromatique ou polychromatique d'orientation constante adapté à se propager dans le guide, par exemple un faisceau de rayons sensiblement parallèles à la direction longitudinale du guide 32ᵢ. Dans l'exemple représenté, chaque source laser 41ᵢ est couplée au guide 32ᵢ de même rang i via l'extrémité 35aᵢ de ce guide.

Le fonctionnement du dispositif de projection 30 est le suivant. Lors de la projection d'une image, les N sources laser 41ᵢ sont alimentées, et, dans chaque dispositif d'extraction 37ᵢ, les cellules d'extraction 39ᵢⱼ sont successivement activées par un circuit de contrôle (non représenté) pour projeter, dans les différentes directions de projection d39ᵢⱼ du dispositif d'extraction 37ᵢ, de la lumière émise par la source 41ᵢ correspondante. Lors de l'activation d'une cellule 39ᵢⱼ, le circuit de contrôle commande la puissance d'émission de la source laser 41ᵢ correspondante, de façon à moduler l'intensité lumineuse émise par le dispositif 30 en fonction de l'angle de projection. Chaque cellule d'extraction 39ᵢⱼ, lorsqu'elle est activée, projette un faisceau lumineux correspondant à un pixel de l'image. L'orientation de la direction d39ᵢⱼ de projection de chaque cellule 39ᵢⱼ est choisie en fonction de l'angle de vision souhaité pour le pixel correspondant. Le dispositif 30 de la figure 2 est ainsi adapté à projeter une image de N*M pixels. Dans cet exemple, dans chaque dispositif d'extraction 37ᵢ, une seule cellule d'extraction 39ᵢⱼ est activée à la fois. Les cellules d'extraction 39ᵢⱼ de même rang j des différents dispositifs d'extraction 37ᵢ peuvent par exemple être activées simultanément de façon à projeter l'image ligne par ligne.

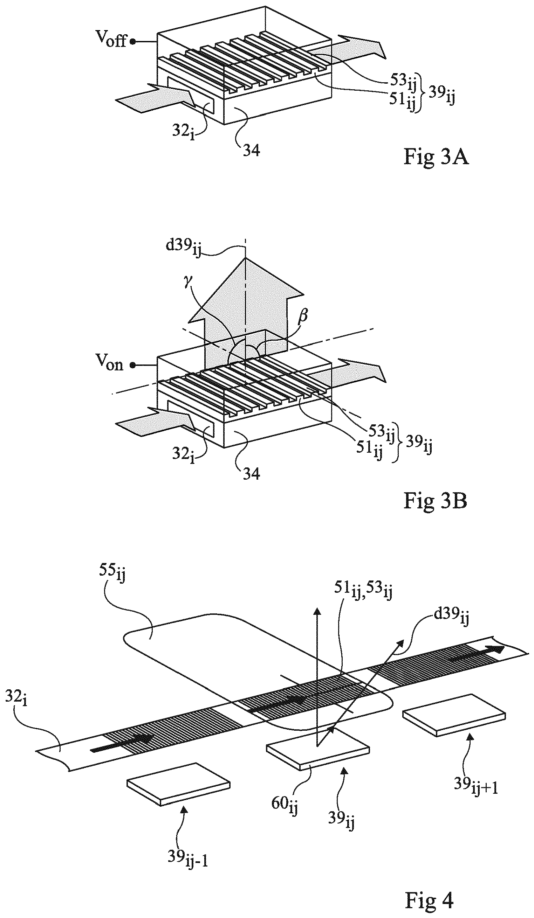

Les figures 3A et 3B sont des vues en perspective illustrant de façon plus détaillée une portion d'un exemple de réalisation du dispositif de projection 30 de la figure 2 dans deux configurations de fonctionnement distinctes. Plus particulièrement, les figures 3A et 3B représentent une portion d'un guide d'onde 32ᵢ du dispositif 30 et un exemple de réalisation d'une cellule d'extraction 39ᵢⱼ couplée à ce guide d'onde. La figure 3A représente la cellule 39ᵢⱼ à l'état inactif, et la figure 3B représente la cellule 39ᵢⱼ à l'état actif.

Dans l'exemple des figures 3A et 3B, la cellule d'extraction 39ᵢⱼ comprend un réseau de diffraction 51ᵢⱼ couplé au guide 32ᵢ par une zone de sa face 35cᵢ. Le réseau de diffraction 51ᵢⱼ est essentiellement constitué par une structure en un matériau transparent comportant une première face plane en contact avec la face 35cᵢ du guide, et une deuxième face opposée à la première face comportant des rainures parallèles régulièrement espacées, par exemple approximativement orthogonales à la direction longitudinale du guide 32ᵢ. Le réseau de diffraction 51ᵢⱼ peut être formé dans le matériau du substrat 34 du côté de la face 34a du substrat si le guide d'onde 32ᵢ est enterré sous la face 34a du substrat. A titre de variante, le réseau de diffraction 51ᵢⱼ peut comprendre une couche rainurée en un matériau transparent revêtant la face 34a du substrat.

La cellule 39ᵢⱼ comprend en outre une couche 53ᵢⱼ en un matériau transparent revêtant la surface rainurée du réseau de diffraction 51ᵢⱼ, et dont la face opposée à la surface rainurée du réseau 51ᵢⱼ est approximativement plane. La couche 53ᵢⱼ est en un matériau dont l'indice de réfraction peut être commandé électriquement par application d'une tension de polarisation. La couche 53ᵢⱼ est par exemple une couche de cristaux liquides. La cellule 39ᵢⱼ comprend en outre des électrodes permettant d'appliquer une tension de polarisation à la couche 53ᵢⱼ pour modifier son indice de réfraction. Par souci de clarté, ces électrodes n'ont pas été représentées sur les figures 3A et 3B. A titre d'exemple, la couche rainurée du réseau de diffraction 51ᵢⱼ peut être réalisée en un matériau électriquement conducteur, par exemple en oxyde d'indium étain (ITO), et servir d'électrode pour l'application d'une tension de polarisation à la couche 53ᵢⱼ. Une deuxième électrode transparente approximativement plane, par exemple en ITO, peut revêtir la face plane de la couche 53ᵢⱼ. D'autres dispositions des électrodes de polarisation de la couche 53ᵢⱼ peuvent toutefois être prévues. A titre d'exemple, les électrodes peuvent être disposées sur les faces latérales de la couche 53ᵢⱼ.

Lorsqu'une tension de polarisation adaptée V_{off} (figure 3A), par exemple égale à 0 V, est appliquée à la couche 53ᵢⱼ, l'indice de réfraction de la couche 53ᵢⱼ est identique ou quasiment identique à celui de la couche rainurée du réseau 51ᵢⱼ, ce qui entraine l'inactivation du dioptre optique formé entre la face rainurée du réseau 51ᵢⱼ et la couche 53ᵢⱼ. La cellule 39ᵢⱼ est alors dans un état que l'on appelle ici état inactif, c'est-à-dire que le faisceau laser guidé par le guide d'onde 32ᵢ, lorsqu'il traverse la zone de couplage entre le guide 32ᵢ et la cellule 39ᵢⱼ, n'est pas perturbé par la cellule 39ᵢⱼ et continue de se propager dans le guide jusqu'à la cellule d'extraction suivante.

Lorsqu'une tension de polarisation adaptée Vₒₙ (figure 3B), différente de V_{off}, est appliquée à la couche 53ᵢⱼ, l'indice de réfraction de la couche 53ᵢⱼ est modifié, ce qui entraine l'activation du dioptre formé entre la face rainurée du réseau 51ᵢⱼ et la couche 53ᵢⱼ. La cellule 39ᵢⱼ est alors dans un état que l'on appelle ici état actif, c'est-à-dire que le faisceau laser guidé par le guide d'onde 32ᵢ interagit avec le réseau 51ᵢⱼ lorsqu'il traverse la zone de couplage entre le guide 32ᵢ et la cellule 39ᵢⱼ. Une partie de l'onde guidée est alors extraite du guide, et est projetée selon une direction formant un angle β (de l'ordre de 90 degrés dans l'exemple représenté) avec la direction longitudinale du guide.

Pour une longueur d'onde donnée de la lumière guidée, l'angle β dépend notamment du pas du réseau 51ᵢⱼ de la cellule. Par ailleurs, la direction de projection de la lumière extraite par la cellule forme un angle γ (de l'ordre de 90 degrés dans l'exemple représenté) avec la direction transversale du guide. Cet angle γ dépend notamment de l'orientation des rainures du réseau 51ᵢⱼ.

Dans un exemple de réalisation du dispositif de projection de la figure 2, les réseaux 51ᵢⱼ des différentes cellules d'extraction 39ᵢⱼ du dispositif ont des pas différents et/ou des orientations différentes par rapport à la direction longitudinale du guide, ce qui permet d'obtenir les différentes orientations souhaitées des directions de projection d39ᵢⱼ des cellules 39ᵢⱼ.

La figure 4 est une vue en perspective illustrant de façon schématique et partielle un autre exemple de réalisation du dispositif de projection de la figure 2. Plus particulièrement, la figure 4 représente une portion d'un guide d'onde 32ᵢ du dispositif 30, et trois cellules d'extraction 39ᵢⱼ₋₁, 39ᵢⱼ et 39ᵢⱼ₊₁ couplées à des zones distinctes de la face 35cᵢ du guide 32i.

Dans l'exemple de la figure 4, chaque cellule d'extraction 39ᵢⱼ comprend les mêmes éléments que dans l'exemple des figures 3A et 3B, c'est-à-dire un réseau de diffraction 51ᵢⱼ couplé au guide 32ᵢ par une zone de sa face 35cᵢ, une couche 53ᵢⱼ d'indice de réfraction commandable électriquement, revêtant la face rainurée du réseau 51ᵢⱼ, et au moins une électrode 55ᵢⱼ de commande de l'indice de réfraction de la couche 53ᵢⱼ, ou électrode d'activation/inactivation de la cellule. Par souci de simplification, seule une électrode de commande 55ᵢⱼ de la cellule 39ᵢⱼ a été représentée sur la figure 4.

Une différence entre l'exemple de réalisation des figures 3A et 3B et l'exemple de réalisation de la figure 4 est que, dans l'exemple de la figure 4, les réseaux 51ᵢⱼ des différentes cellules d'extraction 39ᵢⱼ du dispositif de projection sont tous sensiblement identiques, c'est-à-dire qu'ils présentent tous le même pas et la même orientation par rapport à la direction longitudinale du guide. Ainsi, dans l'exemple de la figure 4, les directions de projection de la lumière en sortie des réseaux 51ᵢⱼ des différentes cellules 39ᵢⱼ ont toutes sensiblement la même orientation par rapport aux faces 35cᵢ des guides. Dans l'exemple non limitatif représenté, la direction de projection de la lumière en sortie des réseaux 51ᵢⱼ est approximativement orthogonale au plan des faces 35cᵢ des guides.

Dans l'exemple de réalisation de la figure 4, chaque cellule 39ᵢⱼ comprend en outre un élément holographique 60ᵢⱼ disposé en regard de la couche d'indice variable 53ᵢⱼ, sur le trajet de la lumière extraite du guide par le réseau 51ᵢⱼ lorsque la cellule est à l'état actif. L'élément holographique 60ᵢⱼ est adapté à orienter le faisceau lumineux extrait du guide 32ᵢ dans la direction de projection d39ᵢⱼ souhaitée pour la cellule 39ᵢⱼ. Dans le cas du dispositif de projection 30 de la figure 2, les éléments holographiques 60ᵢⱼ des différentes cellules 39ᵢⱼ ont tous des propriétés d'orientation différentes. Dans l'exemple représenté en figure 4, les éléments holographiques d'orientation 60ᵢⱼ sont des éléments d'orientation réflectifs. A titre de variante, des éléments holographiques d'orientation transmissifs peuvent être utilisés.

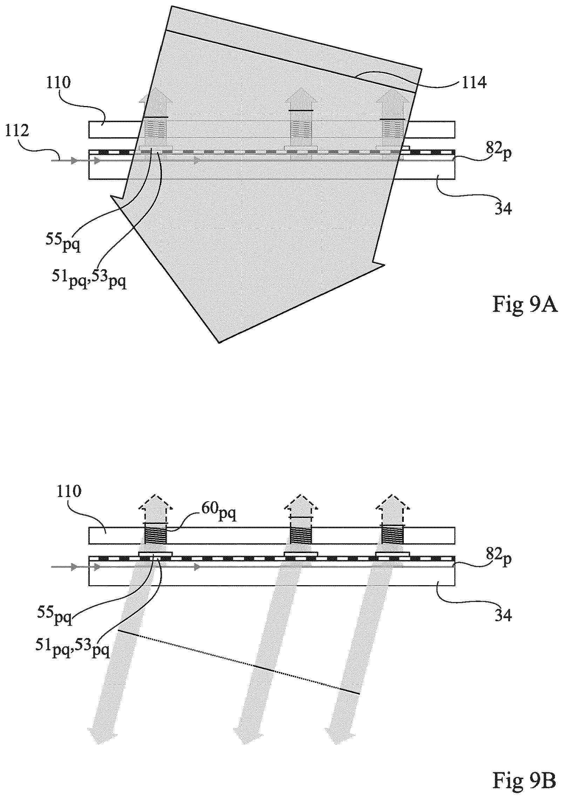

Un avantage de l'exemple de réalisation de la figure 4 est lié au fait que les réseaux de diffraction 51ᵢⱼ du dispositif de projection sont tous sensiblement identiques, ce qui facilite leur réalisation. Un exemple de procédé de fabrication des éléments holographiques d'orientation 60ᵢⱼ du dispositif de la figure 4 sera décrit ci-après en relation avec les figures 9A et 9B.

A titre d'exemple non limitatif de dimensionnement, les guides d'onde 32ᵢ peuvent être des guides d'indice de réfraction de l'ordre de 1,52, formés dans un substrat 34 d'indice de l'ordre de 1,5, et présentant une largeur d'environ 800 nm et une épaisseur d'environ 500 nm. Les sources 41ᵢ sont par exemple adaptées à émettre un faisceau laser à une longueur d'onde de l'ordre de 650 nm. Dans l'exemple de réalisation de la figure 4, les réseaux de diffraction 51ᵢⱼ peuvent avoir un pas d'environ 430 nm. La surface de la zone d'émission de chacune des cellules d'extraction 39ᵢⱼ est par exemple comprise entre 1 et 20 µm².

Les inventeurs ont constaté que, pour certains dimensionnements du dispositif de projection, notamment lorsque les zones d'émission des cellules d'extraction 39ᵢⱼ du dispositif de projection sont de petite taille, par exemple lorsqu'elles présentent une surface inférieure ou égale à 5 µm², les faisceaux projetés par les différentes cellules d'extraction 39ᵢⱼ du dispositif peuvent présenter un angle de divergence non-négligeable, que l'oeil peut être incapable d'accommoder. Dans ce cas, l'image sur la rétine d'un faisceau lumineux projeté par une cellule d'extraction 39ᵢⱼ du dispositif ne sera pas un point, mais une tache relativement étendue que l'observateur percevra comme un halo flou.

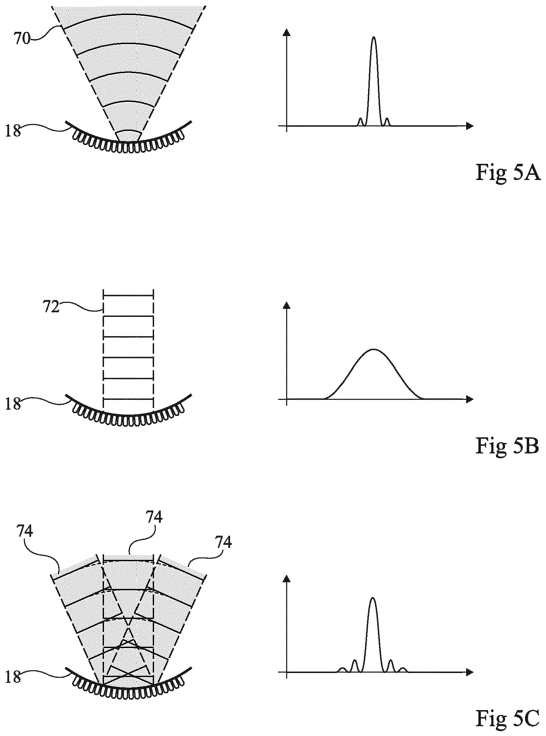

Les figures 5A à 5C illustrent ce phénomène ainsi qu'un exemple d'une solution qui peut être mise en oeuvre pour que l'utilisateur perçoive des images nettes même lorsque les zones d'émission des cellules d'extraction du dispositif de projection sont de petite taille.

La figure 5A représente la forme prise, à l'intérieur de l'oeil, par un faisceau lumineux 70 issu d'un point d'un objet sur lequel l'oeil est capable d'accommoder sa vision, par exemple un point d'un objet situé à l'infini. La figure 5A représente en outre, sous la forme d'un diagramme, la distribution spatiale de l'énergie lumineuse du faisceau 70 reçue par la rétine 18 au fond de l'oeil. Comme cela apparaît sur la figure, l'oeil transforme le front d'onde du faisceau incident (qui est par exemple un front d'onde plan dans le cas d'un objet situé à l'infini) en un front d'onde circulaire centré sur un point de la rétine 18. L'énergie du faisceau 70 est alors concentrée en une zone ponctuelle ou considérée comme telle de la rétine 18. L'observateur perçoit donc effectivement un point. L'angle de vision α (voir figure 1A) du faisceau incident fixe la position de ce point (ou centre de convergence du front d'onde circulaire) sur la rétine.

La figure 5B représente la forme prise, à l'intérieur de l'oeil, par un faisceau lumineux 72 présentant un angle de divergence que l'oeil n'est pas capable d'accommoder, par exemple un faisceau lumineux divergent émis par une cellule d'extraction 39ᵢⱼ d'un dispositif de projection du type décrit en relation avec les figures 2 à 4 lorsque la surface d'émission de cette cellule est de petite taille. La figure 5B représente en outre la distribution spatiale de l'énergie lumineuse du faisceau 72 reçue par la rétine 18 au fond de l'oeil. L'oeil transforme le front d'onde du faisceau incident (qui est par exemple un front d'onde circulaire centré sur la source d'émission du faisceau) en un front d'onde plan ou en un front d'onde circulaire centré sur un point situé derrière la rétine 18 - c'est-à-dire du côté de la rétine 18 opposé à la pupille. L'énergie du faisceau 72 est ainsi alors répartie dans une zone relativement large de la rétine 18. L'observateur ne perçoit donc pas un point mais un halo flou dont la position sur la rétine est fixée par l'angle de vision α du point d'émission.

La figure 5C illustre une solution qui peut être mise en oeuvre pour reconstituer, à l'intérieur de l'oeil, l'illusion d'un front d'onde circulaire centré sur un point de la rétine, à partir d'une pluralité de faisceaux présentant chacun, à l'extérieur de l'oeil, un angle de divergence relativement important, par exemple des faisceaux émis par des cellules d'extraction à petite surface d'émission d'un dispositif de projection du type décrit en relation avec les figures 2 à 4. Dans cet exemple, plusieurs faisceaux lumineux divergents 74 correspondant à un même pixel de l'image à afficher, sont émis simultanément en direction de l'oeil, depuis des zones distinctes du dispositif de projection (c'est-à-dire par des cellules d'extraction distinctes du dispositif), avec des directions de projection parallèles convergeant en un même point de la rétine. La figure 5C représente la forme prise, à l'intérieur de l'oeil, par chacun des faisceaux 74. La figure 5C représente en outre la distribution spatiale de l'énergie lumineuse des faisceaux 74 reçue par la rétine 18 au fond de l'oeil. Comme cela apparaît sur la figure, l'oeil transforme le front d'onde de chaque faisceau 74 (qui est par exemple un front d'onde circulaire centré sur la source d'émission du faisceau) en un front d'onde plan ou en un front d'onde circulaire centré sur un point situé derrière la rétine 18. Si les différents faisceaux 74 sont cohérents et convenablement accordés en phase, les fronts d'onde interfèrent constructivement au point de convergence situé sur la rétine 18. On obtient ainsi un effet de focalisation par interférences multiples. L'énergie des faisceaux 74 est ainsi concentrée en une zone ponctuelle ou pouvant être considérée comme telle de la rétine 18. En d'autres termes, en multipliant les faisceaux 74, il est possible de reconstituer, à l'intérieur de l'oeil, un assemblage de fronts d'onde qui épouse une forme de front d'onde circulaire du type décrit en relation avec la figure 5A. L'observateur perçoit alors un point dont la position sur la rétine dépend de l'orientation des faisceaux incidents.

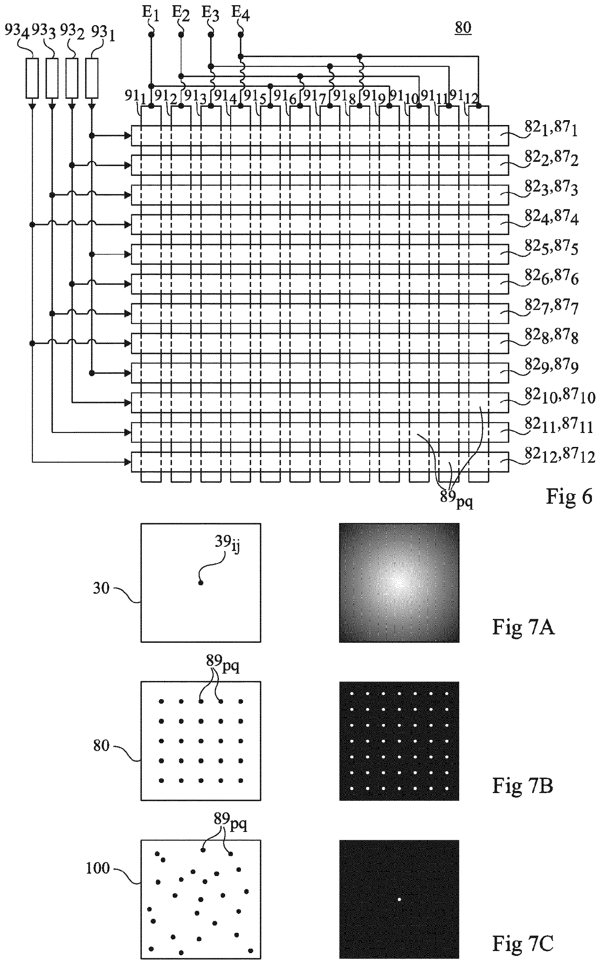

La figure 6 est une vue de dessus illustrant de façon schématique un exemple de réalisation d'un dispositif de projection d'image 80 adapté à mettre en oeuvre un fonctionnement du type décrit en relation avec la figure 5C. Le dispositif de projection 80 est adapté à projeter une image de N*M pixels. Dans l'exemple illustratif et non limitatif représenté, N=M=4.

Le dispositif de projection 80 comprend k*N guides d'onde optiques 82ₚ formés dans un substrat transparent (non représenté), où k est un nombre entier supérieur ou égal à 2 et p est un nombre entier compris dans la plage allant de 1 à k*N. Dans l'exemple représenté, k est égal à 3. Les guides d'onde 82ₚ du dispositif de projection 80 de la figure 6 ont par exemple sensiblement la même forme en ruban rectiligne que les guides 32ᵢ du dispositif de la figure 2, et peuvent être agencés sensiblement de la même manière (c'est-à-dire parallèles entre eux, alignés, disposés dans un même plan moyen, et régulièrement répartis le long d'une direction orthogonale à la longueur des guides). A titre d'exemple, en section transversale, la plus grande dimension de chacun des guides d'onde 82ₚ n'excède pas 2 µm.

Le dispositif de projection 80 comprend en outre k*N dispositifs d'extraction de lumière 87ₚ, chaque dispositif d'extraction 87ₚ étant couplé au guide d'onde 82ₚ de même indice p. Chaque dispositif d'extraction 87ₚ comprend l*M cellules d'extraction 89_{pq} activables/désactivables électriquement, couplées à des zones distinctes du guide 82ₚ, où l est un nombre entier supérieur ou égal à 2 et q est un nombre entier compris dans la plage allant de 1 à l*M. Dans l'exemple représenté, l est égal à 3. Les cellules d'extraction 89_{pq} sont par exemple des cellules du type décrit en relation avec les figures 3A, 3B ou 4. Dans cet exemple, les cellules 89_{pq} d'un même dispositif d'extraction 87ₚ sont régulièrement réparties le long du guide 82ₚ correspondant, et les cellules 89_{pq} de même rang q sont alignées selon une direction orthogonale à la longueur des guides 82ₚ. Dans l'exemple représenté, les cellules 89_{pq} de même rang q sont activables ou désactivables simultanément via une même électrode de commande 91_{q}, pour permettre un affichage ligne par ligne des images. Chaque cellule 89_{pq} est adaptée, lorsqu'elle est activée, à extraire de la lumière se propageant dans le guide 82ₚ et à projeter cette lumière vers l'extérieur du dispositif dans une direction d89_{pq} (non représentée sur la figure 6) prédéterminée. Lorsqu'une cellule 89_{pq} est désactivée, elle n'a pas d'effet sur la lumière circulant dans le guide 82ₚ.

Le dispositif de projection 80 comprend en outre N sources d'émission laser 93ᵢ commandables en intensité, chaque source laser 93ᵢ étant couplée à k guides d'onde choisis parmi les k*N guides d'onde 82ₚ du dispositif. Chaque source laser 93ᵢ est adaptée à injecter simultanément, dans les k guides d'onde auxquels elle est couplée, un faisceau lumineux d'orientation constante adapté à se propager dans ces guides. Dans l'exemple représenté, les k guides d'onde couplés à une même source laser 93ᵢ sont disposés à espacement régulier tout le long de la dimension du dispositif 80 orthogonale à la longueur des guides. Plus particulièrement, dans l'exemple représenté, les k guides d'onde couplés à une même source laser 93ᵢ sont les guides 82ᵢ, 82ᵢ₊ₖ, ..., 82_{i+s*k}, avec s entier tel que i+s*k≤k*N.

Par ailleurs, dans le dispositif de projection 80 de la figure 6, chaque dispositif d'extraction 87ₚ comprend M groupes de l cellules d'extraction 89_{pq} connectées - c'est-à-dire activables ou désactivables simultanément via une même électrode de commande. Dans l'exemple représenté, chaque groupe de l cellules 89_{pq} connectées d'un même dispositif d'extraction 87ₚ a ses cellules régulièrement réparties sur toute la longueur du guide correspondant. Plus particulièrement, dans l'exemple représenté, dans chaque dispositif d'extraction 87ₚ, chaque groupe de l cellules connectées d'indice j (j allant de 1 à M) comprend les cellules 89ₚⱼ, 89ₚⱼ₊ₗ, ..., 89_{pj+t*l}, avec t entier tel que j+t*l≤l*M. Dans l'exemple représenté, le dispositif de projection 80 comprend M bornes de commande Eⱼ, chaque borne Eⱼ étant connectée aux électrodes 91ⱼ, 91ⱼ₊ₗ, ..., 91_{j+t*l}.

Le fonctionnement du dispositif de projection 80 est le suivant. Pour afficher un pixel de coordonnées i,j de l'image, la source laser 93ᵢ est allumée à l'intensité souhaitée pour ce pixel, et la borne de commande Eⱼ est mise à un potentiel permettant d'activer les cellules 89_{pq} auxquelles elle est connectée. Un groupe de k*l cellules d'extraction régulièrement réparties sur toute la surface du dispositif 80 se trouve alors à l'état actif et alimenté optiquement par la même source laser 93ᵢ. L'ensemble des faisceaux projetés par les cellules de ce groupe correspond à l'affichage du pixel de coordonnées i,j de l'image. Ces faisceaux provenant d'une même source laser 93ᵢ sont cohérents et peuvent être adaptés en phase. Les cellules du groupe ont toutes sensiblement la même orientation de projection, choisie en fonction de l'angle de vision souhaité pour le pixel. On peut ainsi obtenir l'effet décrit en relation avec la figure 5C de reconstitution d'un front d'onde circulaire centré sur un point de la rétine dont la position dépend de l'angle de vision α souhaité pour le pixel. A titre d'exemple, les N sources laser 93ᵢ peuvent être allumées simultanément et les M électrodes Eⱼ peuvent être mises successivement à l'état actif de façon à projeter l'image ligne par ligne. De préférence, dans un même ensemble de k dispositifs d'extraction 87ₚ couplés à une même source laser 93ᵢ, un seul groupe de k*l cellules d'extraction interconnectées est activé à la fois.

Les figures 7A à 7C représentent schématiquement diverses configurations d'un dispositif de projection d'image, et, pour chaque configuration, la perception, pour un observateur, de la projection d'une image ponctuelle.

La figure 7A illustre le cas d'un dispositif de projection 30 du type décrit en relation avec la figure 2, dans lequel la projection d'un pixel de l'image est effectuée par une unique cellule d'extraction 39ᵢⱼ. On considère ici le cas où la surface d'émission de la cellule 39ᵢⱼ est relativement petite, typiquement inférieure ou égale à 5 µm². Comme cela apparaît en partie droite de la figure 7A, lorsqu'une image ponctuelle, c'est-à-dire une image à un seul pixel, est projetée, l'utilisateur perçoit un halo lumineux flou s'étalant sur une large partie de la rétine.

La figure 7B illustre le cas d'un dispositif de projection 80 du type décrit en relation avec la figure 6, dans lequel la projection d'un pixel de l'image est effectuée par un groupe de plusieurs cellules d'extraction 89_{pq} de même orientation régulièrement réparties sur toute la surface du dispositif de projection, pour obtenir un effet de focalisation par interférences multiples du type décrit en relation avec la figure 5C. On considère le cas où la surface d'émission de chaque cellule 89_{pq} est relativement petite, typiquement inférieure ou égale à 5 µm². Comme cela apparaît en partie droite de la figure 7B, lorsqu'une image ponctuelle, c'est-à-dire une image à un seul pixel, est projetée, l'utilisateur perçoit bien un point, à une position de la rétine correspondant à l'angle de vision α souhaité pour ce pixel. Toutefois, comme cela apparaît sur la figure 7B, l'observateur perçoit en outre, en plus de ce point, une pluralité de points parasites régulièrement répartis sur la surface de la rétine. Cette répétition parasite du point image résulte de la distribution périodique des faisceaux émis pour l'affichage d'un même pixel d'image, qui conduit à un effet de résonance sur les accords de phase. Cet effet s'explique par la notion de décomposition du front d'onde circulaire (souhaité à l'intérieur de l'oeil) en un spectre angulaire. Le plus grand angle du spectre fixe la largeur du point de focalisation, et le pas de distribution du spectre fixe le pas de répétition du motif projeté sur le point de focalisation. En fonction du pas de distribution angulaire choisi pour le spectre, les résonances parasites peuvent se produire sur la rétine de l'observateur et ainsi être perçues par l'observateur, ce qui peut poser problème dans certaines applications.

La figure 7C illustre le cas d'un dispositif de projection 100 similaire au dispositif 80 des figures 6 et 7B, mais dans lequel la projection d'un pixel de l'image est effectuée par un groupe de plusieurs cellules d'extraction 89_{pq} interconnectées irrégulièrement réparties sur la surface du dispositif de projection, par exemple réparties de façon aléatoire ou pseudo-aléatoire sur la surface du dispositif de projection. Comme précédemment, on considère le cas où la surface d'émission de chaque cellule 89_{pq} est relativement petite, typiquement inférieure ou égale à 5 µm². Comme cela apparaît en partie droite de la figure 7C, lorsqu'une image ponctuelle, c'est-à-dire une image à un seul pixel, est projetée, l'utilisateur perçoit bien un point, à une position de la rétine correspondant à l'angle de vision α souhaité pour ce pixel, et l'effet de répétition de ce point observé dans la configuration de la figure 7B ne se produit pas. Les inventeurs ont en effet constaté que lorsque la distribution des zones d'émission est irrégulière, les fronts d'onde n'interfèrent tous en phase qu'au point de convergence des axes principaux des faisceaux sur la rétine.

Pour obtenir une répartition irrégulière des zones d'émission correspondant à un même pixel de l'image, une première option est d'adapter le dispositif de la figure 6 de façon que les guides d'onde 82ₚ alimentés en lumière par une même source laser 93ᵢ soient irrégulièrement répartis le long de la dimension du dispositif orthogonale à la longueur des guides, et/ou de façon que, dans chaque dispositif d'extraction 87ₚ, les cellules 89_{pq} d'un même groupe de cellules activables-désactivables simultanément par une même électrode de commande soient irrégulièrement réparties le long de la dimension longitudinale des guides.

Une deuxième option qui peut être prévue en combinaison avec la première option ou indépendamment, est de prévoir des guides d'onde 82ₚ non rectilignes, en serpentins de formes irrégulières, et/ou des électrodes 91_{q} non rectilignes, en serpentins de formes irrégulières.

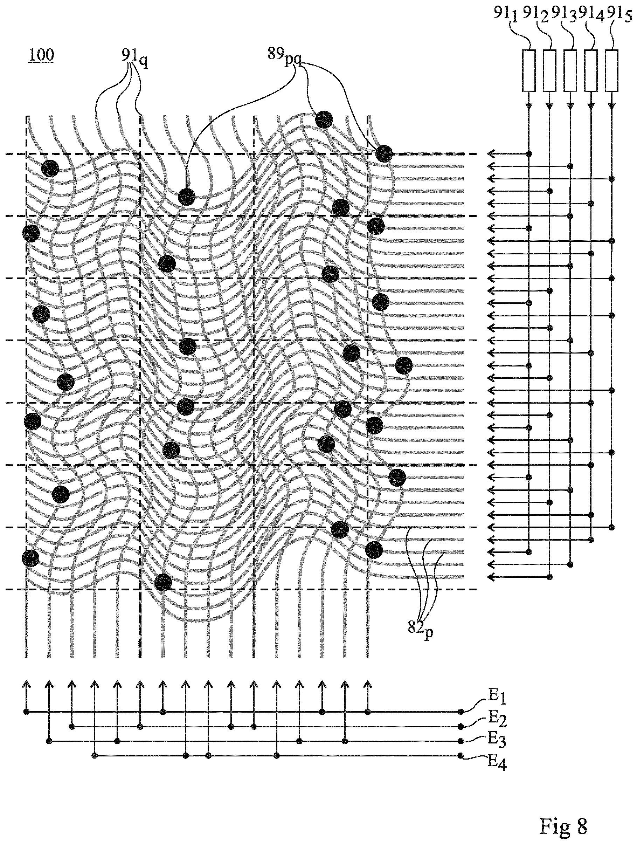

La figure 8 est une vue de dessus illustrant de façon schématique un exemple de réalisation d'un dispositif de projection d'image 100 du type décrit en relation avec la figure 6, adapté sur la base des première et deuxième options susmentionnées de façon à obtenir une distribution irrégulière des cellules d'extraction 89_{pq} interconnectées optiquement et électriquement correspondant à un même pixel de l'image à afficher. Dans l'exemple non limitatif représenté, N = 5, M = 4, k = 7 et l = 4. Sur la figure 8, les l*k cellules d'extraction 89_{pq} utilisées pour l'affichage du pixel de coordonnées i = 1 et j = 1 de l'image sont représentées par des points noirs.

Un avantage des dispositifs de projection décrits en relation avec les figures 2 à 8 réside dans leur faible encombrement, leur rendement lumineux élevé, et les nombreuses possibilités qu'ils offrent en termes de champ de vision et/ou d'accommodation. On notera en particulier que, en terme d'encombrement, un avantage des dispositifs proposés est qu'ils peuvent être placés directement devant l'oeil d'un utilisateur, sans système optique intermédiaire et sans lame de renvoi semi-réfléchissante. De plus, les dispositifs proposés sont compatibles avec la visualisation d'une scène réelle par transparence à travers le dispositif, notamment du fait de la transparence des matériaux utilisés pour fabriquer le dispositif. En particulier, les effets diffractifs des différents composants optiques (réseaux ou hologrammes) sont limités vis-à-vis des faisceaux provenant de la scène extérieure. Ceci est notamment dû au faible pas des structures (par exemple de l'ordre de 400 nm) et des faibles écarts d'indice mis en jeu.

Pour augmenter la taille de la boîte à oeil, c'est-à-dire la zone dans laquelle l'oeil de l'utilisateur peut se déplacer devant le dispositif de projection tout en continuant à voir l'intégralité de l'image, on peut prévoir de répliquer les structures décrites, de façon que, pour chaque pixel de l'image, plusieurs faisceaux ou ensembles de faisceaux de même orientation angulaire soient émis simultanément depuis des zones distinctes du dispositif de projection, par des cellules d'extraction distinctes. A titre d'exemple, dans le dispositif de projection de la figure 2, pour augmenter la taille de la boîte à oeil dans la direction longitudinale des guides 32i, on peut prévoir de prolonger les guides 32ᵢ et de répliquer une ou plusieurs fois la structure formée par les dispositifs d'extraction 37ᵢ dans la direction longitudinale des guides. Pour augmenter la taille de la boîte à oeil dans la direction transversale des guides 32ᵢ, on peut prévoir de répliquer une ou plusieurs fois l'ensemble du dispositif dans la direction transversale des guides. De la même façon, il est possible d'augmenter la taille de la boîte à oeil dans la direction longitudinale des guides et/ou dans la direction transversale des guides dans un dispositif de projection du type décrit en relation avec les figures 6 et 8 en répliquant les structures décrites sur une plus grande surface.

Les figures 9A et 9B sont des vues en coupe illustrant de façon schématique et partielle un exemple d'un procédé de fabrication d'un dispositif de projection d'image du type décrit ci-dessus. Plus particulièrement, les figures 9A et 9B illustrent un exemple de procédé de fabrication des éléments holographiques d'orientation dans un dispositif de projection comportant des cellules d'extraction du type décrit en relation avec la figure 4.

La figure 9A illustre une structure comprenant, dans un substrat transparent 34, un ou plusieurs guides d'onde 82ᵢ, et, couplé à chaque guide d'onde, une pluralité de cellules d'extraction 89_{pq} comprenant chacune un réseau de diffraction 51_{pq} recouvert par une couche d'indice variable 53_{pq}, et une électrode 55_{pq} de commande de la couche 53_{pq}. Au-dessus de cette structure, sur le trajet de la lumière en sortie des réseaux de diffraction 51_{pq}, est disposée une couche 110 en un matériau holographique. Dans l'exemple représenté, la couche 110 s'étend sur sensiblement toute la surface du dispositif de projection. A titre de variante, le matériau holographique peut être disposé uniquement en regard des surfaces d'émission des réseaux de diffraction 51_{pq}.

Pour former, dans une ou plusieurs cellules d'extraction 89_{pq}, un élément holographique 60_{pq} présentant un angle d'orientation particulier, un faisceau laser émis par une même source est séparé en deux voies. Une première voie 112 est mise en forme et injectée dans le ou les guides d'onde 32ₚ auxquels sont couplées les cellules 89_{pq} concernées par cet angle. Une deuxième voie 114 est collimatée et étendue pour couvrir sensiblement toute la surface du dispositif de projection. Cette seconde voie est projetée sur la couche 110 avec l'angle de visualisation souhaité pour les cellules concernées. Les cellules concernées sont alors activées électriquement par l'intermédiaire de leurs électrodes de commande, de façon que les réseaux de diffraction 51_{pq} assurent l'extraction du signal dans les cellules concernées. En regard de chacune des cellules activées optiquement et électriquement, le matériau holographique de la couche 110 enregistre une figure d'interférence. A l'issue de cette étape, comme l'illustre la figure 9B, les portions exposées de la couche 110 présentent les propriétés d'orientation souhaitées. Ces portions forment les éléments d'orientation 60_{pq} des cellules concernées. Optionnellement, pour ne pas exposer les portions de la couche 110 non concernées par l'angle considéré, l'exposition du dispositif au faisceau 114 peut être réalisée au travers d'une matrice programmable de micro-miroirs adaptée à limiter l'étendue du faisceau 114 aux seules zones concernées par l'orientation angulaire du faisceau 114.

Le processus peut être réitéré autant de fois que nécessaire en modifiant à chaque fois l'orientation du faisceau 114 et l'adressage optique et électrique des cellules d'extraction actives, de façon à former les différents éléments d'orientation du dispositif de projection.

On notera que pour une orientation angulaire d'émission donnée du dispositif de projection, si les dimensions des trajets optiques entre la source d'émission laser et les différentes cellules d'extraction concernées par cette orientation ne sont pas soigneusement choisies, les faisceaux projetés en sortie des réseaux de diffraction de ces cellules ne sont pas accordés en phase. Un avantage du procédé de fabrication décrit en relation avec les figures 9A et 9B est que les éléments holographiques 60_{pq} correspondant à une même orientation angulaire d'émission vont naturellement prendre en compte la dispersion de phase des faisceaux en sortie des réseaux 51_{pq}. Ainsi, une fois les hologrammes enregistrés, les éléments d'orientation 60_{pq} auront non seulement pour effet d'orienter selon l'angle souhaité la lumière injectée dans le dispositif, mais aussi d'accorder en phase les différents faisceaux émis simultanément par le dispositif avec une même orientation angulaire, permettant ainsi d'obtenir un effet de focalisation par interférences multiples du type décrit en relation avec la figure 5C.

Des modes de réalisation particuliers ont été décrits. Diverses variantes et modifications apparaîtront à l'homme de l'art.

En particulier, les modes de réalisation décrits ne se limitent pas aux exemples numériques mentionnés ci-dessus, notamment en termes de taille d'image pouvant être projetée par les dispositifs proposés. En pratique, on pourra prévoir des dispositifs adaptés à projeter des images comportant plusieurs centaines à plusieurs dizaines de milliers de pixels. A titre de variante, le dispositif de projection peut comporter un unique guide d'onde dans le cas où l'on souhaite projeter une image d'une seule ligne de pixels.

De plus l'utilisation des dispositifs de projection proposés ne se limite pas au domaine des dispositifs d'affichage en réalité augmentée de type HMD. En particulier, les dispositifs de projection proposés peuvent être utilisés pour afficher des images à l'attention d'un utilisateur sans que ces images ne soient destinées à se superposer à une scène réelle. Dans ce cas, il n'est pas nécessaire que le dispositif de projection soit transparent.

## Revendications

1. Dispositif (30 ; 80 ; 100) de projection d'une image, comprenant :
au moins un guide d'onde (32ᵢ ; 82ₚ) formé dans un substrat (34) ;
au moins une source d'émission laser (41ᵢ ; 91ᵢ ; 93ᵢ) commandable en intensité configurée pour injecter dans le guide d'onde (32ᵢ ; 82ₚ) un faisceau laser d'orientation constante ; et
au moins un dispositif d'extraction (37ᵢ ; 87ₚ) comprenant une pluralité de cellules d'extraction (39ᵢⱼ ; 89_{pq}) couplées à des zones distinctes du guide (32ᵢ ; 82ₚ) via une face principale (35cᵢ) du guide, chaque cellule (39ᵢⱼ ; 89_{pq}) correspondant à un unique pixel de l'image et étant activable électriquement pour extraire de la lumière du guide et projeter cette lumière selon une direction de projection (d39ᵢⱼ ; d89_{pq}) prédéterminée,
le dispositif étant **caractérisé en ce que** les différentes cellules d'extraction (39ᵢⱼ ; 89_{pq}) ont des directions de projection (d39ᵢⱼ ; d89_{pq}) d'orientations distinctes par rapport à la face principale (35cᵢ) du guide correspondant.

2. Dispositif selon la revendication 1, dans lequel chaque cellule d'extraction (39ᵢⱼ ; 89_{pq}) comprend :
un réseau de diffraction (51) revêtant une portion d'une face du guide ;
une couche (53) d'indice de réfraction commandable électriquement recouvrant le réseau (51) ; et
au moins une électrode (55) de commande de l'indice de réfraction de ladite couche (53).

3. Dispositif (30 ; 80 ; 100) selon la revendication 2, dans lequel des réseaux de diffraction (51) de cellules d'extraction (39ᵢⱼ ; 89_{pq}) distinctes ont des pas distincts ou des orientations distinctes par rapport à une direction longitudinale du guide (32ᵢ ; 82ₚ).

4. Dispositif (30 ; 80 ; 100) selon la revendication 2, dans lequel chaque cellule d'extraction (39ᵢⱼ ; 89_{pq}) comprend un élément holographique (60) superposé à la couche (53) d'indice de réfraction commandable, adapté à orienter, dans la direction (d39ᵢⱼ ; d89_{pq}) de projection de la cellule, de la lumière extraite du guide (32ᵢ ; 82ₚ) par le réseau de diffraction (51) de la cellule.

5. Dispositif (30 ; 80 ; 100) selon la revendication 4, dans lequel les réseaux de diffraction (51) des différentes cellules (39ᵢⱼ ; 89_{pq}) ont le même pas et la même orientation par rapport à une direction longitudinale du guide (32ᵢ ; 82ₚ).

6. Dispositif (30 ; 80 ; 100) selon l'une quelconque des revendications 1 à 5, comprenant plusieurs guides d'onde (32ᵢ ; 82ₚ) formés dans le substrat (34), plusieurs sources d'émission laser (41ᵢ ; 91ᵢ ; 93ᵢ) et plusieurs dispositifs d'extraction (37ᵢ ; 87ₚ), chaque guide d'onde étant couplé à l'une des sources d'émission laser et à l'un des dispositifs d'extraction.

7. Dispositif (30 ; 80 ; 100) selon les revendications 2 et 6, dans lequel les différents dispositifs d'extraction (37ᵢ ; 87ₚ) ont tous le même nombre de cellules d'extraction (39ᵢⱼ ; 89_{pq}), et dans lequel les cellules (39ᵢⱼ ; 89_{pq}) de même rang des différents dispositifs d'extraction (37ᵢ ; 87ₚ) ont leurs électrodes de commande (55) connectées, le rang d'une cellule d'extraction (39ᵢⱼ ; 89_{pq}) correspondant à son ordre de positionnement, par rapport aux autres cellules du même dispositif d'extraction (37ᵢ ; 87ₚ), entre des première et deuxième extrémités du guide (32ᵢ ; 82ₚ) auquel est couplé le dispositif d'extraction.

8. Dispositif (80 ; 100) selon la revendication 6 ou 7, dans lequel plusieurs guides d'onde (82ₚ) sont connectés optiquement, c'est-à-dire qu'ils sont adaptés à être alimentés en lumière par une même source lumineuse (93ᵢ).

9. Dispositif (80 ; 100) selon la revendication 8, dans lequel plusieurs cellules d'extraction (89_{pq}) couplées à des guides d'onde (82ₚ) distincts connectés optiquement ont des directions de projection (d89_{pq}) parallèles.

10. Dispositif (80 ; 100) selon l'une quelconque des revendications 1 à 9, dans lequel, dans chaque dispositif d'extraction (37ᵢ ; 87ₚ), plusieurs cellules d'extraction (39ᵢⱼ ; 89_{pq}) sont connectées électriquement, ces cellules ayant des directions de projection (d39ᵢⱼ ; d89_{pq}) parallèles.

11. Dispositif (100) selon l'une quelconque des revendications 1 à 10, dans lequel les cellules d'extraction (89_{pq}) sont réparties de façon irrégulière sur la surface du dispositif.

12. Dispositif (30 ; 80 ; 100) selon l'une quelconque des revendications 1 à 11, dans lequel ledit faisceau laser d'orientation constante est un faisceau de rayons sensiblement parallèles à la direction longitudinale du guide d'onde (32ᵢ ; 82ₚ) dans lequel il est injecté.

13. Dispositif (30 ; 80 ; 100) selon l'une quelconque des revendications 1 à 12, dans lequel, en section transversale, la plus grande dimension dudit au moins un guide d'onde (32ᵢ ; 82ₚ) est inférieure ou égale à 2 µm.

14. Dispositif (30 ; 80 ; 100) selon l'une quelconque des revendications 1 à 13, dans lequel la surface d'émission de chacune des cellules d'extraction (39ᵢⱼ ; 89_{pq}) est inférieure ou égale à 5 µm².

## Patentansprüche

1. Eine Bildprojektionsvorrichtung (30; 80; 100), die Folgendes aufweist:
wenigstens einen Wellenleiter (32ᵢ; 82ₚ), der in einem Substrat (34) ausgebildet ist;
wenigstens eine Laseremissionsquelle (41ᵢ; 91ᵢ; 93ᵢ) von steuerbarer Intensität, die konfiguriert ist zum Einkoppeln eines Laserstrahls von konstanter Ausrichtung in den Wellenleiter (32ᵢ; 82ₚ); und
wenigstens eine Extraktionsvorrichtung (31ᵢ; 87ₚ), die eine Vielzahl von Extraktionszellen (39ᵢⱼ; 89_{pq}) aufweist, die an verschiedenen Regionen der Leiter (32ᵢ; 82ₚ) über eine Hauptoberfläche (35cᵢ) des Leiters gekoppelt sind, wobei jede Zelle (39ᵢⱼ; 89_{pq}) einem einzelnen Pixel des Bildes entspricht und geeignet ist, elektrisch aktiviert zu werden, um Licht von dem Leiter zu extrahieren und dieses Licht entlang einer vorbestimmten Projektionsrichtung (d39ᵢⱼ; d89_{pq}) zu projizieren,
die Vorrichtung ist **dadurch gekennzeichnet, dass** die verschiedenen Extraktionszellen (39ᵢⱼ; 89_{pq}) Projektionsrichtungen (d39ᵢⱼ; d89_{pq}) mit verschiedenen Ausrichtungen bezüglich der Hauptoberfläche (35cᵢ) des entsprechenden Leiters besitzen.

2. Vorrichtung nach Anspruch 1, wobei jede Extraktionszellen (39ᵢⱼ; 89_{pq}) Folgendes aufweist:
ein Beugungsgitter (51), das einen Teil der Oberfläche des Leiters abdeckt;
eine Schicht (53) mit einem elektrisch steuerbaren Brechungsindex, der das Beugungsgitter (51) abdeckt; und
wenigstens eine Elektrode (55) zum Steuern des Brechungsindex der Schicht (53).

3. Vorrichtung (30; 80; 100) nach Anspruch 2, wobei die Beugungsgitter (51) der verschiedenen Extraktionszellen (39ᵢⱼ; 89_{pq}) verschiedene Neigungen oder verschiedene Ausrichtungen bezüglich einer Längsrichtung des Leiters (32ᵢ; 82ₚ) besitzen.

4. Vorrichtung (30; 80; 100) nach Anspruch 2, wobei jede Extraktionszelle (39ᵢⱼ; 89_{pq}) ein holografisches Element (60) aufweist, das über der Schicht (53) des steuerbaren Brechungsindex liegt, geeignet zum Ausrichten von Licht, das von dem Leiter (32ᵢ; 82ₚ) durch das Beugungsgitter (51) der Zelle extrahiert wurde, in der Projektionsrichtung (d39ᵢⱼ; d89_{pq}) der Zelle.

5. Vorrichtung (30; 80; 100) nach Anspruch 4, wobei die Beugungsgitter (51) der verschiedenen Zellen (39ᵢⱼ; 89_{pq}) die gleiche Neigung und die gleiche Ausrichtung bezüglich der Längsrichtung des Leiters (32ᵢ; 82ₚ) besitzen.

6. Vorrichtung (30; 80; 100) nach einem der Ansprüche 1 bis 5, die eine Vielzahl von Wellenleitern (32ᵢ; 82ₚ) aufweist, die in dem Substrat (34) gebildet sind, eine Vielzahl von Laseremissionsquellen (41ᵢ; 91ᵢ; 93ᵢ) und eine Vielzahl von Extraktionsvorrichtungen (37ᵢ; 87ₚ), wobei jeder Wellenleiter an eine der Laseremissionsquellen und an eine der Extraktionsvorrichtungen gekoppelt ist.

7. Vorrichtung (30; 80; 100) nach Anspruch 2 und 6, wobei die verschiedenen Extraktionsvorrichtungen (37ᵢ; 87ₚ) alle die gleiche Anzahl von Extraktionszellen (39ᵢⱼ; 89_{pq}) besitzen, und wobei die Zellen (39ᵢⱼ; 89_{pq}) des gleichen Ranges der verschiedenen Extraktionsvorrichtungen (37ᵢ; 87ₚ) ihre Steuerelektroden (55) verbunden haben, wobei der Rang einer Extraktionszelle (39ᵢⱼ; 89_{pq}) seiner Positionsfolge bezüglich der anderen Zellen der gleichen Extraktionsvorrichtung (37ᵢ; 87ₚ) zwischen den ersten und zweiten Enden des Leiters (32ᵢ; 82ₚ) entspricht, mit der die Extraktionsvorrichtung gekoppelt ist.

8. Vorrichtung (80; 100) nach Anspruch 6 oder 7, wobei eine Vielzahl der Wellenleiter (82ₚ) optisch verbunden ist, das heißt, sie ist geeignet, mit Licht von der gleichen Lichtquelle (93ᵢ) versorgt zu werden.

9. Vorrichtung (80; 100) nach Anspruch 8, wobei eine Vielzahl der Extraktionszellen (89_{pq}), die an verschiedene optisch-verbundene Wellenleiter (82ₚ) gekoppelt ist, parallele Projektionsrichtungen (d89_{pq}) besitzt.

10. Vorrichtung (80; 100) nach einem der Ansprüche 1 bis 9, wobei in jeder Extraktionsvorrichtung (37ᵢ; 87ₚ) eine Vielzahl von Extraktionszellen (39ᵢⱼ; 89_{pq}) elektrisch verbunden sind, wobei diese Zellen parallele Projektionsrichtungen (d39ᵢⱼ; d89_{pq}) besitzen.

11. Vorrichtung (100) nach einem der Ansprüche 1 bis 10, wobei die Extraktionszellen (89_{pq}) unregelmäßig über die Oberfläche der Vorrichtung verteilt sind.

12. Vorrichtung (30; 80; 100) nach einem der Ansprüche 1 bis 11, wobei der Laserstrahl von kontanter Ausrichtung ein Strahlenbündel ist, das im Wesentlichen parallel zu der Längsrichtung des Wellenleiters (32ᵢ; 82ₚ) ist, in den es eingekoppelt wird.

13. Vorrichtung (30; 80; 100) nach einem der Ansprüche 1 bis 12, wobei im transversalen Querschnitt die größte Dimension des wenigstens einen Wellenleiters (32ᵢ; 82ₚ) kleiner als oder gleich 2 µm ist.

14. Vorrichtung (30; 80; 100) nach einem der Ansprüche 1 bis 13, wobei die Emissionsoberflächenregion der Extraktionszellen (39ᵢⱼ; 89_{pq}) kleiner als oder gleich 5 µm² ist.

## Claims

1. An image projection device (30; 80; 100) comprising:
at least one waveguide (32ᵢ; 82ₚ) formed in a substrate (34) ;
at least one laser emission source (41ᵢ; 91ᵢ; 93ᵢ) of controllable intensity configured to inject into the waveguide (32ᵢ; 82ₚ) a laser beam of constant orientation; and
at least one extraction device (37ᵢ; 87ₚ) comprising a plurality of extraction cells (39ᵢⱼ; 89_{pq}) coupled to different areas of the guide (32ᵢ; 82ₚ) via a main surface (35cᵢ) of the guide, each cell (39ᵢⱼ; 89_{pq}) corresponding to a single pixel of the image and being capable of being electrically activated to extract light from the guide and project this light along a predetermined projection direction (d39ᵢⱼ; d89_{pq}),
the device being **characterized in that** the different extraction cells (39ᵢⱼ; 89_{pq}) have projection directions (d39ᵢⱼ; d89_{pq}) with different orientations with respect to the main surface (35cᵢ) of the corresponding guide.

2. The device of claim 1, wherein each extraction cell (39ᵢⱼ ; 89_{pq}) comprises:
a diffraction grating (51) coating a portion of a surface of the guide;
a layer (53) having an electrically-controllable refraction index covering the grating (51); and
at least one electrode (55) for controlling the refraction index of said layer (53).

3. The device (30; 80; 100) of claim 2, wherein diffraction gratings (51) of different extraction cells (39ᵢⱼ; 89_{pq}) have different pitches or different orientations relative to a longitudinal direction of the guide (32ᵢ; 82ₚ).

4. The device (30; 80; 100) of claim 2, wherein each extraction cell (39ᵢⱼ; 89_{pq}) comprises a holographic element (60) superimposed to the layer (53) of controllable refraction index, capable of orienting, in the projection direction (d39ᵢⱼ; d89_{pq}) of the cell, light extracted from the guide (32ᵢ; 82ₚ) by the diffraction grating (51) of the cell.

5. The device (30; 80; 100) of claim 4, wherein the diffraction gratings (51) of the different cells (39ᵢⱼ; 89_{pq}) have the same pitch and the same orientation relative to a longitudinal direction of the guide (32ᵢ; 82ₚ).

6. The device (30; 80; 100) of any of claims 1 to 5, comprising a plurality of waveguides (32ᵢ; 82ₚ) formed in the substrate (34), a plurality of laser emission sources (41ᵢ; 91ᵢ; 93ᵢ) and a plurality of extraction devices (37ᵢ; 87ₚ), each waveguide being coupled to one of the laser emission sources and to one of the extraction devices.

7. The device (30; 80; 100) of claims 2 and 6, wherein the different extraction devices (37ᵢ; 87ₚ) all have the same number of extraction cells (39ᵢⱼ; 89_{pq}), and wherein the cells (39ᵢⱼ; 89_{pq}) of same rank of the different extraction devices (37ᵢ; 87ₚ) have their control electrodes (55) connected, the rank of an extraction cell (39ᵢⱼ; 89_{pq}) corresponding to its positioning order, relative to the other cells of the same extraction device (37ᵢ; 87ₚ), between first and second ends of the guide (32ᵢ; 82ₚ) having the extraction device coupled therewith.

8. The device (80; 100) of claim 6 or 7, wherein a plurality of waveguides (82ₚ) are optically connected, that is, they are capable of being supplied with light from a same light source (93ᵢ).

9. The device (80; 100) of claim 8, wherein a plurality of extraction cells (89_{pq}) coupled to different optically-connected waveguides (82ₚ) have parallel projection directions (d89_{pq}).

10. The device (80; 100) of any of claims 1 to 9, wherein, in each extraction device (37ᵢ; 87ₚ), a plurality of extraction cells (39ᵢⱼ; 89_{pq}) are electrically connected, these cells having parallel projection directions (d39ᵢⱼ; d89_{pq}).

11. The device (100) of any of claims 1 to 10, wherein the extraction cells (89_{pq}) are irregularly distributed across the surface of the device.

12. The device (30; 80; 100) of any of claims 1 to 11, wherein said laser beam of constant orientation is a beam of rays substantially parallel to the longitudinal direction of the waveguide (32ᵢ; 82ₚ) into which it is injected.

13. The device (30; 80; 100) of any of claims 1 to 12, wherein, in transverse cross-section, the largest dimension of said at least one waveguide (32ᵢ; 82ₚ) is smaller than or equal to 2 µm.

14. The device (30; 80; 100) of any of claims 1 to 13, wherein the emission surface area of each of the extraction cells (39ᵢⱼ; 89_{pq}) is smaller than or equal to 5 µm².
